# EUROPÄISCHE PATENTANMELDUNG

(11) **EP 1 962 400 A2**
(43) Veröffentlichungstag der Anmeldung: **27.08.2008**
(21) Anmeldenummer: 08151857.3
(22) Anmeldetag: 24.02.2008
(51) Int. Cl.: H02G 3/30

(54) **Deckenstütze**

(30) Priorität: 25.02.2007 CH 3142007
(71) Anmelder: Zurecon AG, 8003 Zürich (CH)
(72) Erfinder: Pfluger, Gerd, CH-4625 Oberbuchsiten (CH)
(74) Vertreter: Rutz & Partner

(57) **Zusammenfassung**

Die Deckenstütze (1), die insbesondere der Montage einer Kabelführungsvorrichtung (6) dient, weist ein Endstück (11) und einen daran anschliessenden Stützenkörper (12) auf, der mit einem Ausleger (5) verbindbar ist, auf den die zu tragende Last (6) abgelegt werden kann. Das Endstück (11) ist mit wenigstens einem mit einer Gewindestange (21) versehenen Metalldübel (2) verbindbar, insbesondere einem Segmentanker, der in der Decke (9) verankerbar ist. Erfindungsgemäss weist das Endstück (11) der Deckenstütze (1) eine Aufnahmeöffnung (111) auf, in die ein an der Gewindestange (21) drehbar gelagertes Verbindungselement (3; 25) zumindest teilweise einführbar und zumindest teilweise unter das Endstück (11) drehbar oder verschiebbar ist, wonach die die Deckenstütze (1) formschlüssig mit dem Metalldübel (2) verbunden ist. In einem ersten Arbeitsschritt kann die Deckenstütze (1) daher in einfacher Weise vormontiert werden. In einem zweiten Arbeitsschritt kann die Deckenstütze (1), ohne dass diese manuell gehalten werden muss, mittels eines Werkzeugs fixiert werden.

## Beschreibung

Die Erfindung betrifft eine der Montage insbesondere von Kabelführungsvorrichtungen, Rohrleitungen und Deckenkonstruktionen dienende Deckenstütze nach dem Oberbegriff des Patentanspruchs 1.

In Gewerbe-, Industrie- und Verwaltungsgebäuden werden Kabel für Stark- und Schwachstromnetze infolge fehlender Eigenstabilität, im Gegensatz zu Rohren, in kanalartige Vorrichtungen wie Kabelbahnen, Gitterbahnen gelegt, und so beispielsweise von einem Schaltfeld zu den Verbrauchern geführt. Kabelführungsvorrichtungen dieser Art sind beispielsweise aus [1], Produktkatalog der LANZ OENSINGEN AG, April 2003, bekannt.

In [1], Seite 10 ff. sind Gitterbahnen, in [1], Seite 18 ff. sind Multibahnen und in [1], Seite 34 ff. sind Weitspann-Multibahnen gezeigt, die je nach der Art und Menge der zu verlegenden Kabel und der vorliegenden Gebäudeverhältnisse zur Anwendung kommen.

Das zur Montage an Decken dienende Trägermaterial für Kabelführungsvorrichtungen besteht normalerweise aus einer sogenannten Deckenstütze, mit der ein Ausleger (Konsole) verbindbar ist. Auf den mit der Deckenstütze verbundenen Ausleger werden die Kabelführungsvorrichtungen abgelegt, wie dies in [1] gezeigt ist.

Die aus [1] bekannte, normalerweise aus verzinktem oder rostfreiem Stahl bestehende Deckenstütze weist eine Kopfplatte auf, die mit einem meist gelochten, stab- oder rohrförmigen Profilteil verschweisst oder verschraubt ist. Diese Kopfplatte wird mittels Montageschrauben bzw. Metalldübel, auch Segmentanker genannt, mit der Decke verbunden. Die in die Ecke eingesenkten Segmentanker sind dabei in der Lage, grössere Lasten zu tragen.

Nach der Montage der Deckenstütze kann der Ausleger auf passender Höhe mit einer Seitenwand des in der Regel U- oder C-förmigen Profilteils verschraubt, oder darin eingehängt werden.

Aufgrund der schweren Lasten sind Deckenstützen dieser Art hohen Belastungen ausgesetzt, weshalb entsprechend gross dimensionierte Vorrichtungen aus verhältnismässig dickem Stahlblech eingesetzt werden. Metallene Deckenstützen der genannten Art weisen typischerweise ein hohes Gewicht auf.

Um die Deckenstützen an der Decke stabil zu montieren, werden sie jeweils mit einer oder mehreren Montageschrauben an der Decke befestigt. Zur Montage der Deckenstütze besteigt der Handwerker normalerweise eine Leiter, wonach die Deckenstütze mit einer Hand gehalten wird. Mit der anderen Hand muss der Handwerker eine Gewindemutter auf die mindestens eine Montageschraube aufsetzen und sicherheitshalber einige Umdrehungen hochschrauben, um die Deckenstütze derart provisorisch zu montieren bzw. zu fixieren. Aufgrund des relativ hohen Gewichts der zu haltenden Deckenstütze, der oft unvorteilhaften Position des Handwerkers auf der Leiter, der auf Baustellen oft schlechten Beleuchtung und der oft grossen Kälte, welche zu klammen Fingern führt, ist diese Montage mit erheblichen Problemen, insbesondere Sicherheitsproblemen verbunden. Aufgetreten sind Handverletzungen bei der beschriebenen Manipulation mit Deckenstützen, Verletzungen durch seitliches Ausschlagen oder Herunterfallen der Deckenstütze. Normalerweise ist auch der Handwerker auf der Leiter jeweils ungesichert.

Der vorliegenden Erfindung liegt daher die Aufgabe zugrunde, eine nicht mit den beschriebenen Nachteilen behaftete Deckenstütze zu schaffen.

Insbesondere ist eine Deckenstütze zu schaffen, die unabhängig von einem gegebenenfalls hohen Gewicht und gegebenenfalls grösseren Abmessungen, ohne Sicherheitsrisiken einfach und rasch montierbar ist. so dass die Montage von Kabelführungsvorrichtungen rasch und sicher erfolgen kann.

Ferner ist eine einfach ausgestaltete und kostengünstig herstellbare Deckenstütze zu schaffen, die es erlaubt, Kabelführungsvorrichtung rasch und sicher zu installieren.

Diese Aufgaben werden mit einer Deckenstütze gelöst, welche die in Anspruch 1 angegebenen Merkmale aufweist. Vorteilhafte Ausgestaltungen der Erfindung sind in weiteren Ansprüchen angegeben.

Die Deckenstütze, die insbesondere der Montage einer Kabelführungsvorrichtung dient, weist ein Endstück und einen daran anschliessenden Stützenkörper auf, der mit einem Ausleger verbindbar ist, auf den die zu tragende Last abgelegt werden kann. Das Endstück ist mit wenigstens einem mit einer Gewindestange versehenen Metalldübel, insbesondere einem Segmentanker, verbindbar, der in der Decke verankerbar ist.

Erfindungsgemäss weist das Endstück der Deckenstütze eine Aufnahmeöffnung auf, in die ein an der Gewindestange drehbar gelagertes Verbindungselement zumindest teilweise einführbar und zumindest teilweise unter das Endstück drehbar oder verschiebbar ist, wonach die die Deckenstütze formschlüssig mit dem Metalldübel verbunden ist.

Die Deckenstütze kann daher in einem ersten Arbeitsschritt gegen den in der Decke verankerten Dübel oder Segmentanker angehoben und in einfacher Weise formschlüssig mit diesem verbunden werden. Nachdem die Deckenstütze formschlüssig mit dem Dübel oder Segmentanker verbunden wurde, kann das Endstück der Deckenstütze in einem zweiten Arbeitsschritt mittels einer Schraubenmutter, gegebenenfalls mittels des Verbindungselements, gegen die Decke geschraubt und unverrückbar fixiert werden.

In einer vorzugsweisen Ausgestaltung weist das Endstück feste oder elastische, dem Verbindungselement zugewandte Drehelemente auf, mittels derer das Verbindungselement während dessen Durchführung durch die Aufnahmeöffnung erfasst und automatisch in eine Montageposition gedreht wird.

Besonders vorteilhaft gelingt die Montage der Deckenstütze bei einer Ausgestaltung mit einem Verbindungselement, das aus einem Halteteil und einem Drehteil besteht, die vorzugsweise mittels der Gewindestange drehbar miteinander verbunden und mittels wenigstens eines Antriebselements automatisch gegeneinander drehbar sind, sobald ein mit dem Halteteil und/oder dem Drehteil verbundenes Arretierelement gelöst wird. Die Deckenstütze kann daher angehoben und gegen den in der Decke verankerten und mit dem Verbindungselement versehenen Dübel oder Segmentanker gestossen werden, so dass das Verbindungselement automatisch betätigt und formschlüssig mit dem Endstück der Deckenstütze (Kopfplatte) verbunden wird. Mittels einer auf die Gewindestange aufgesetzten Montagemutter kann die Deckenstütze wiederum abschliessend unverrückbar fixiert werden.

Besonders wesentlich bei der erfindungsgemässen Lösung ist, dass der Montagevorgang in zwei Arbeitsschritte unterteilt wird, die vom Handwerker unabhängig voneinander vollzogen werden können. Der Handwerker kann eine erfindungsgemässe Deckenstütze im ersten Arbeitsschritt mit dem in der Decke vorhandenen Segmentanker formschlüssig und damit absolut absturzsicher verbinden, ohne dass Werkzeug oder Befestigungsmittel benötigt werden. Im zweiten Arbeitsschritte kann die Deckenstütze, ohne dass diese selbst gehalten werden muss, durch Festdrehen der Schraubenmutter fixiert werden.

Das Arretierelement weist vorzugsweise ein dem Fixieren des Drehteils dienendes Fixierteil und ein mit dem Endstück zusammenwirkendes Löseteil auf, das während des Einführens des Drehteils in die Aufnahmeöffnung mit dem Endstück der Deckenstütze zusammenwirkt. Vor der Montage der Deckestütze sind das Halteteil und das Drehteil derart ausgerichtet und vom Arretierelement gehalten, dass sie in die im Endstück vorgesehene Aufnahmeöffnung eindringen können. Während des Eindringens des Halteteils und des Drehteils in die Aufnahmeöffnung wird das Arretierelement am Löseteil vom Endstück erfasst und vom Drehteil abgelöst, so dass dieses unter das Endstück drehen kann, während das Halteteil sich noch in der Aufnahmeöffnung befindet und dort drehfest gehalten ist. Das durch die Aufnahmeöffnung hindurch geführte Drehteil wird daher mittels des Antriebselements automatisch unter das Endstück gedreht, wonach das Drehteil und das Halteteil gegeneinander verkreuzt sind.

Das Fixierteil des installierten Arretierelements kann das Halteteil und das Drehteil auf verschiedene Weise in Position halten. Beispielsweise liegt das Fixierteil aussen am Drehteil und/oder am Halteteil an. Alternativ kann das Fixierteil in Öffnungen gehalten sein, die im Halteteil und/oder im Drehteil vorgesehen sind. In der letztgenannten Ausgestaltung kann das Verbindungsteil besonders vorteilhaft gefertigt und zusammengebaut werden. Durch die Integration des Fixierteils in das Verbindungsteil entfallen gegebenenfalls störende Wechselwirkungen mit dem Endstück der Deckenstütze.

Das wenigstens eine Antriebselement kann in verschiedenen Ausgestaltungen und Materialbeschaffenheiten realisiert werden. Vorzugsweise wird das elastische Antriebselement mit dem Halteteil und/oder dem Drehteil einstückig verbunden, wodurch ein kompakter Aufbau des Verbindungselements realisierbar ist.

Die gegebenenfalls mittels der Gewindestange des Segmentankers gelenkig miteinander verbundenen Halte- und Drehteile können durch das Antriebselement mittels Zug- oder Druckkraft gegeneinander verschoben werden.

Das Antriebselement kann
a) aus wenigstens zwei je mit dem Halte- und Drehteil verbundenen Hartmagneten bestehen, deren Pole gleicher Art einander zugewandt sind; oder
b) eine vorzugsweise metallene und koaxial zur Gewindestange ausgerichtete Spiralfeder sein, deren Enden am Halteteil und am Drehteil anliegen; oder
c) ein elastisches Kunststoffelement sein, das mit dem Halteteil und dem Drehteil verbunden ist; oder
d) elastisch oder federelastisch zwischen einander überlappenden Teilen des Halteteils und des Drehteils vorgesehen sein.

Das Verbindungselement oder das daran vorgesehene Halteteil ist vorzugsweise direkt oder über ein Lagerelement relativ formschlüssig oder relativ kraftschlüssig mit der Gewindestange verbunden. Dadurch wird gewährleistet, dass sich das Verbindungselement während der Einführung in die Aufnahmeöffnung, gegebenenfalls beim Lösen des Arretierelements, nicht nach oben verschiebt. Die kraftschlüssige Verbindung ist relativ kraftschlüssig, d.h. derart gewählt, dass das Verbindungselement, nach der Verriegelung des Drehteils, erst mit erhöhter Krafteinwirkung, insbesondere beim Festziehen der Montagemutter, entlang der Gewindestange nach oben verschiebbar ist.

In einer weiteren vorzugsweisen Ausgestaltung weist die im Endstück vorgesehene Aufnahmeöffnung ein grösseres erstes und ein kleineres zweites Öffnungsteil auf. Das grössere erste Öffnungsteil ist derart dimensioniert, dass die Gewindestange und die damit verbundene Schraubenmutter hindurch führbar sind. Das vorzugsweise im Endstück zentral angeordnete kleinere zweite Öffnungsteil ist derart dimensioniert, dass die Gewindestange vorzugsweise spielfrei seitlich einschiebbar ist. Der an das zweite Öffnungsteil angrenzende Rand, der Teil des Endstücks ist, dient dabei als Flansch für die Schraubenmutter.

Das in die Montageposition verschobene oder gedrehte Verbindungselement, gegebenenfalls das Halteteil oder die Schraubenmutter können in dieser Position auf verschiedene Arten fixiert und/oder gesichert werden. Vorzugsweise wird das das Endstück mit einem Sitz versehen, in den das Verbindungselement eingesenkt werden kann. Zusätzlich oder alternativ können Widerhaken vorgesehen sein, welche das Verbindungselement zurück halten. Beispielsweise kann zwischen dem ersten und zweiten Öffnungsteil ein Teil des Endstücks umgebogen werden, um einen Haken oder eine Nase zu bilden. Ferner kann bei der Bearbeitung des Endstücks, beispielsweise bei Einbringen der Aufnahmeöffnung ein Sitz eingeprägt werden, der einen oder mehrere Millimeter tief ist und vorzugsweise entsprechend der Form des Verbindungselements gewählt ist. Unter Einwirkung des Eigengewichts beleibt die Deckenstütze nach Vollzug des ersten Arbeitsschritts somit sicher gehalten und kann im zweiten Arbeitsschritt mit einfachen Handgriffen fixiert werden.

Nachfolgend wird die Erfindung, einschliesslich weiterer vorzugsweiser Ausgestaltungen, anhand von Zeichnungen beispielsweise näher erläutert. Dabei zeigt:
- Fig. 1: eine erfindungsgemässe Deckenstütze 1 mit einem in einer Decke 9 befestigten Segmentanker 2, der eine Gewindestange 21 aufweist, an der ein Verbindungselement 3 drehbar gelagert ist, das in eine Aufnahmeöffnung 111 im Endstück 11 der Deckenstütze 1 einführbar ist;
- Fig. 2: eine erfindungsgemässe Deckenstütze 1 in einer vorzugsweisen Ausgestaltung mit einem Verbindungselement 3, das ein Halteteil 32 und ein Drehteil 31 aufweist, die anhand eines Arretierelements 33 sowie eines Antriebselements 34 miteinander verbunden sind;
- Fig. 3: die Deckenstütze 1 von Figur 2 nach der formschlüssigen Verbindung des Verbindungselements 3 mit dem Endstück 11;
- Fig. 4a-e: verschiedene Ausgestaltungen des Antriebselements 34a, ..., 34e sowie des Halteteils 32 und des Drehteils 31;
- Fig. 5a-c: ein vorzugsweise ausgestaltetes Verbindungselement 3 mit dem Halteteil 32, dem Drehteil 31 und dem Arretierelement 33 in verschiedenen Positionen;
- Fig. 6a-f: die Deckenstütze 1 in einer Weiterbildung der Ausgestaltung von Figur 1;
- Fig. 7: eine weitere vorzugsweise Ausgestaltung der Deckenstütze 1;
- Fig. 8a-b: eine erfindungsgemässe Deckenstütze 1 mit einem Endstück 11, in dem eine zweiteilige Aufnahmeöffnung 111; 111A, 111B vorgesehen ist, in zwei verschiedenen Montagepositionen;
- Fig. 9a: die Deckenstütze 1 in der Montageposition von Figur 8a, bei der die mit der Schraubenmutter 25 versehenen Gewindestange 21 des Segmentankers 2 in den grösseren ersten Öffnungsteil 111A der Aufnahmeöffnung 111 eingeführt wird; und
- Fig. 9b: die Deckenstütze 1 in der Montageposition von Figur 8b, bei der die mit der Schraubenmutter 25 versehenen Gewindestange 21 des Segmentankers 2 in den kleineren zweiten Öffnungsteil 111B der Aufnahmeöffnung 111 eingeführt wird.

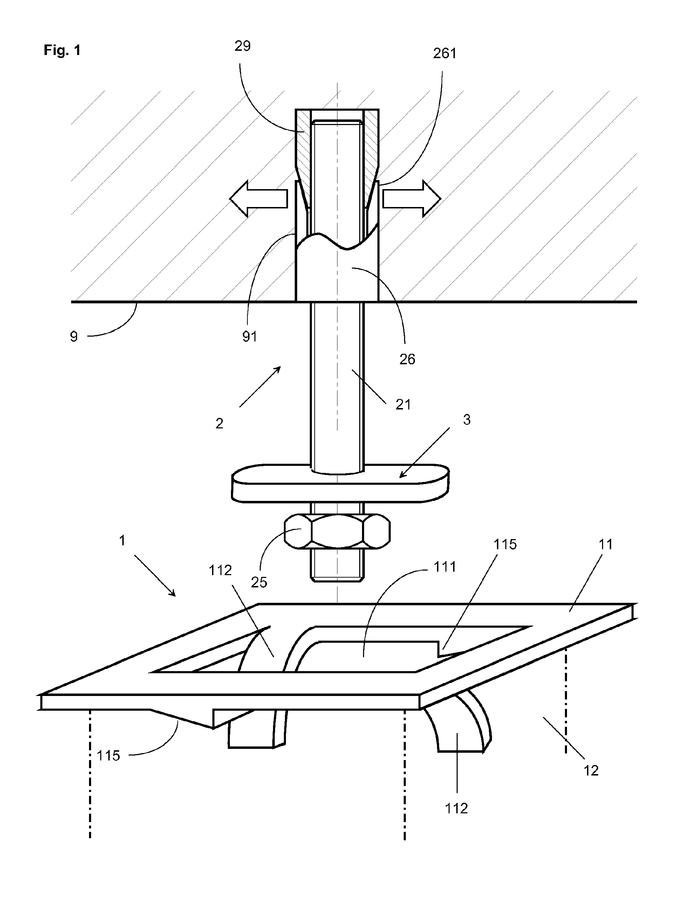

Figur 1 zeigt eine erfindungsgemässe Deckenstütze 1 mit einem Körper 12, der oben mit einem Endstück 11 versehen ist. Weiter zeigt Figur 1 einen Dübel oder Segmentanker 2, der in einer Bohrung 91 in einer Decke 9 befestigtet ist. Segmentanker dieser Art sind beispielsweise aus [2], DE 197 56 997 A1 bekannt. Der gezeigte Segmentanker 2 weist ein von einer Gewindestange 21 gehaltenes Kopfstück 29 auf, das gegen das Endstück 261 einer Hülse 26 gezogen wird und dieses radial nach aussen drückt, wodurch der Segmentanker 2 in der Bohrung 91 verankert wird.

Das Endstück 11 der Deckenstütze 1 weist eine Aufnahmeöffnung 111 auf, in die ein an der Gewindestange 21 des Segmentankers 2 in der Art eines Propellers drehbar gelagertes Verbindungselement 3 einführbar ist. Die Aufnahmeöffnung 111 und das Verbindungselement 3 weisen aneinander angepasste Querschnitte etwa in Form eines langgestreckten Rechteckes auf, so dass das durch die Aufnahmeöffnung 111 hindurch geführte Verbindungselement 3 durch eine Drehung unterhalb des Endstücks 11 verankert werden kann. Zur Drehung des propellerartigen Verbindungselements 3 sind an einander diagonal gegenüber liegenden Ecken Drehelemente 112 vorgesehen, welche das Verbindungselement 3 bei der Einführung in die Aufnahmeöffnung 111 erfassen und drehen. Nach der Drehung liegt das Verbindungselement 3 quer zur Aufnahmeöffnung 111, wodurch das Endstück 11 unten weit überlappt und dadurch gehalten wird. Damit das Verbindungselement 3 anschliessend nicht mehr selbsttätig zurückdrehen kann, sind Stoppelemente in der Art von Widerhaken 115 vorgesehen. Die Drehelemente 112, die einander entgegen gerichtet, zungenförmig nach unten verlaufen, sind am Endstück 11 angeformt und können daher einfach gefertigt werden. Alternativ können separat gefertigte, vorzugsweise elastische Drehelemente 112 mit dem Endstück 11 verbunden werden. Diese Ausgestaltung der Deckenstütze 1, insbesondere des plattenförmigen Endstücks 11 erlaubt eine einfache Einführung des Verbindungselements 3. Nachteilig ist hingegen, dass das Endstück 11 besonders geformt werden muss.

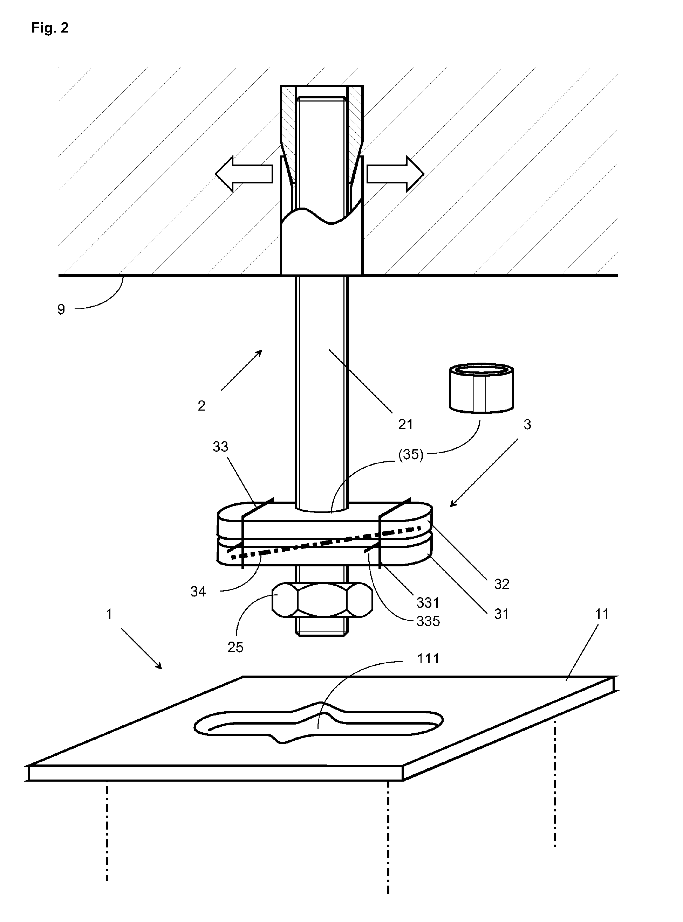

Figur 2 zeigt eine erfindungsgemässe Deckenstütze 1 in einer weiteren vorzugsweisen Ausgestaltung. Bei dieser Ausgestaltung weist das Verbindungselement 3 ein Halteteil 32 und ein Drehteil 31 auf, die mittels der Gewindestange 21 des Segmentankers 2 drehbar gelagert und anhand eines Arretierelements 33 sowie eines Antriebselements 34 miteinander verbunden sind.

Das symbolisch dargestellte Arretierelement 33 weist ein der Fixierung des Drehteils 31 dienendes Fixierteil 331 und Löseteil 335 auf, das mit dem Endstück 11 der Deckenstütze 1 zusammenwirken kann, wie dies nachstehend noch beschrieben ist.

Das symbolisch dargestellte Antriebselement 34 dient dazu, das Halteteil 32 und das Drehteil 31 um die durch die Gewindestange 21 gebildete gemeinsame Drehachse gegeneinander zu drehen, sobald das Arretierelement 33 gelöst wird. Beispielsweise drückt oder zieht das Antriebselement 34 das vom Halteteil 32 gelöste Drehteil 31 soweit, bis das Drehteil 31 die Montageposition erreicht, wobei das Halteteil 32 und das Drehteil 31 zumindest annähernd ein Kreuz bilden.

Zumindest das Halteteil 32 ist mit der Gewindestange 21 beispielsweise durch einen Presssitz relativ kraftschlüssig verbunden, welcher das Halteteil 32 vertikal unverschiebbar hält, wenn das Arretierelement 33 durch Krafteinwirkung vom Verbindungselement 3 gelöst wird. Erst bei erhöhter Krafteinwirkung, beispielsweise beim Festziehen der Schraubenmutter 25, die unterhalb des Verbindungselements 3 auf die Gewindestange 21 aufgebracht ist, kann das Verbindungselement 3 nach oben verschoben werden. Diese Verbindung des Halteteils 32 kann auf verschiedene Arten erreicht werden. Beispielsweise wird das Halteteil 32 aus Kunststoff gefertigt und mit einer Gewindebohrung versehen, die der Aufnahme der Gewindestange 21 dient. Das Halteteil 32 ist daher relativ formschlüssig mit der Gewindestange 21 verbindbar, so dass das Arretierelement 33, sofern notwendig, auch mit einer grösseren Krafteinwirkung vom Verbindungselement 3 gelöst werden kann, ohne dass das Verbindungselement 3 bzw. das Halteteil 32 nach oben verschoben wird. Erst beim Festziehen der Schraubenmutter 25 wird das Kunststoffgewinde aufgebrochen und das Verbindungselement 3 nach oben verschoben. Diese relativ kraftschlüssigen oder auch die beschriebenen schwachformschlüssigen Verbindungen können bei den Ausgestaltungen von Figur 1 und Figur 2 auch mittels eines entsprechend ausgestalteten Lagerelements 35 erzielt werden. Beispielsweise kann ein mit einem Innengewinde versehener oder komprimierbarer Kunststoffring vorgesehen werden, der in die Bohrung bzw. die Bohrungen im Verbindungselement 3 eingeführt wird.

Wie in Figur 2 weiter gezeigt ist, ist die Aufnahmeöffnung 111 derart ausgestaltet, dass sie sowohl das von der Gewindestange 21 gehaltene Verbindungselement 3 als auch die Schraubenmutter 25 aufnehmen kann.

Die Montage der Deckenstütze 1 erfolgt in einfacher Weise in zwei Arbeitsschritten, die unabhängig voneinander vollzogen werden können.

In einem ersten Arbeitsschritt wird die Deckestütze 1 erfasst und mit dem Endstück 11 gegen das auf der Gewindestange 21 vormontierte Verbindungselement 3 geführt, so dass dieses mit der Schraubenmutter 25 in die Aufnahmeöffnung 111 eintreten kann. Bei diesem Vorgang wird das Arretierelement 33 vom Endstück 11 erfasst und vom Drehteil 31 gelöst. Nachdem das Drehteil 31 vollständig durch die Aufnahmeöffnung 111 hindurch getreten ist, wird dieses vom Antriebselement 34 gegenüber dem Halteteil 32 gedreht, welches sich noch immer innerhalb der Aufnahmeöffnung 111 befindet. Die beiden Arretierelemente 33 wurden erfasst und vollständig abgelöst. Grundsätzlich genügt es jedoch, wenn die Arretierelemente 33 soweit angehoben werden, bis das Drehteil 31 frei drehbar ist.

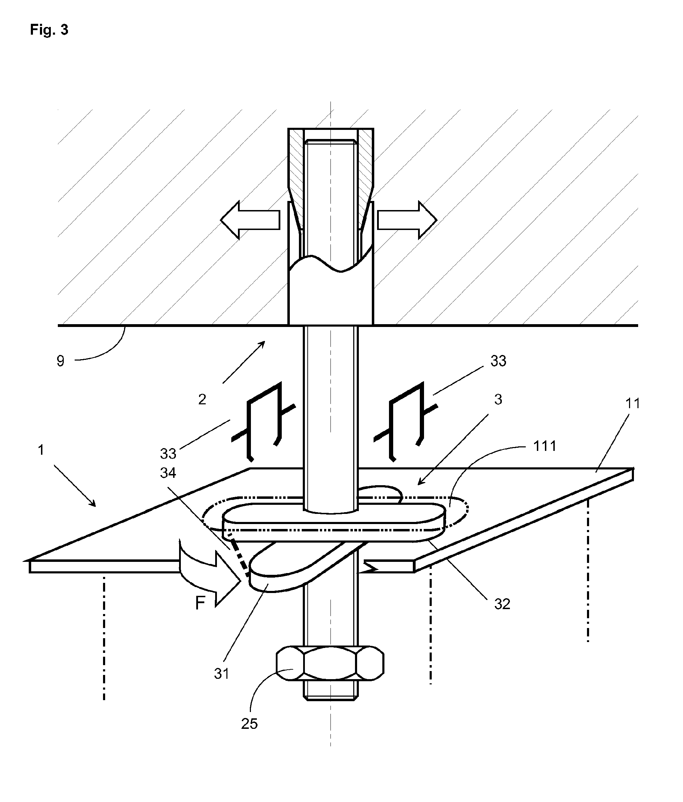

Figur 3 zeigt die Deckenstütze 1 von Figur 2 nach der formschlüssigen Verbindung des Verbindungselements 3 mit dem Endstück 11, die nach Durchführung des ersten Arbeitsschritts erfolgt ist. Die Deckenstütze 1 hängt dank des quer gestellten Drehteils 31 nun gesichert am Segmentanker 2 und kann vom Handwerker durch Festziehen der Schraubenmutter 25 fixiert werden. Aufgrund der Aufteilung des Montagevorganges in zwei Arbeitsschritte genügen einfache Handgriffe des Handwerkers. Im ersten Arbeitsschritt ist die Deckenstütze 1 lediglich anzuheben. Im zweiten Arbeitsschritt ist lediglich eine Schraubenmutter 25 festzuziehen.

Ausgehend von der erfindungsgemässen Lösung sind zahlreiche vorteilhafte Ausgestaltungen der Deckenstütze 1 realisierbar. Insbesondere können Antriebselemente 34 in verschiedenen Ausgestaltungen verwendet werden.

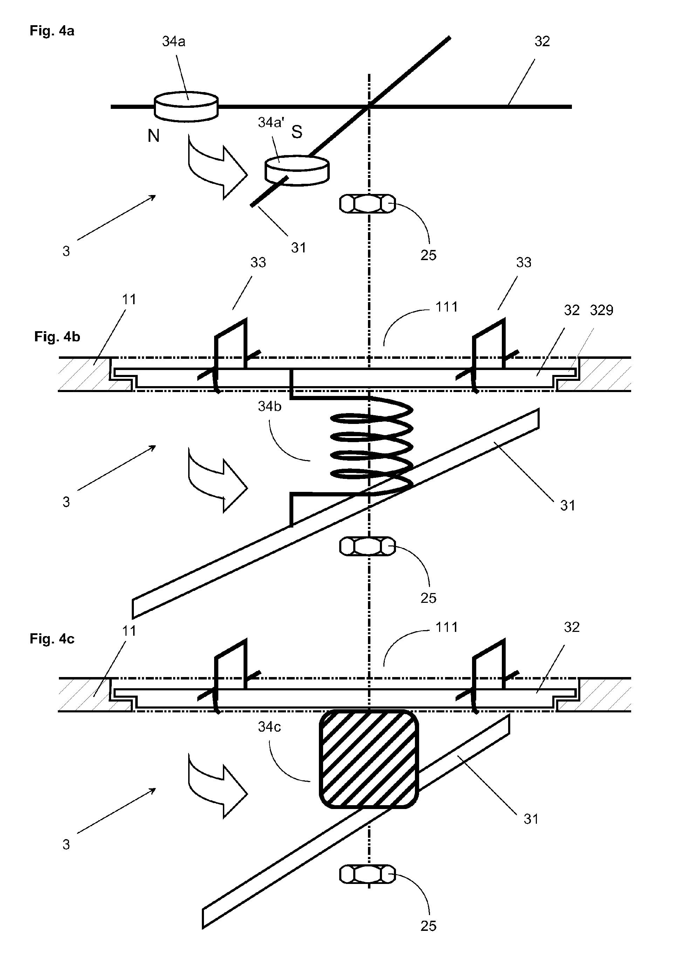

In Figur 4a besteht das Antriebselement 34a, 34a' aus zwei je mit dem Halteteil 32 und dem Drehteil 31 verbundenen starken Permanentmagneten bzw. Hartmagneten, deren Pole gleicher Art einander zugewandt sind. Sobald das Arretierelement 33 vom Verbindungselement 3 gelöst wird, drehen die beiden Hartmagneten das Drehteil 31 in die Montageposition und verhindern, dass dieses selbsttätig zurückdreht. Kräftige Hartmagneten, die beispielsweise seltene Erden enthalten, sind kostengünstig erhältlich und können in einfacher Weise montiert werden. Beispielsweise können Hartmagneten ohne weitere Montagemittel in eine Vertiefung eines Metallkörpers eingesetzt werden und werden durch magnetischen Rückschluss automatisch gehalten. Die Magneten können fabrikatorisch einfach montiert werden und gewährleisten die kraftvolle Auslenkung des Drehteils 31, sobald dieses befreit wird.

In Figur 4b ist das Antriebselement 34b eine vorzugsweise aus Metall gefertigte und koaxial zur Gewindestange 21 ausgerichtete Spiralfeder, deren Enden am Halteteil 32 und am Drehteil 31 anliegen und die beiden Teile 31, 32 gegeneinander drehen.

In Figur 4c ist das Antriebselement 34c ein elastisches Kunststoffelement, das mit dem Halteteil 32 und dem Drehteil 31 verbunden ist.

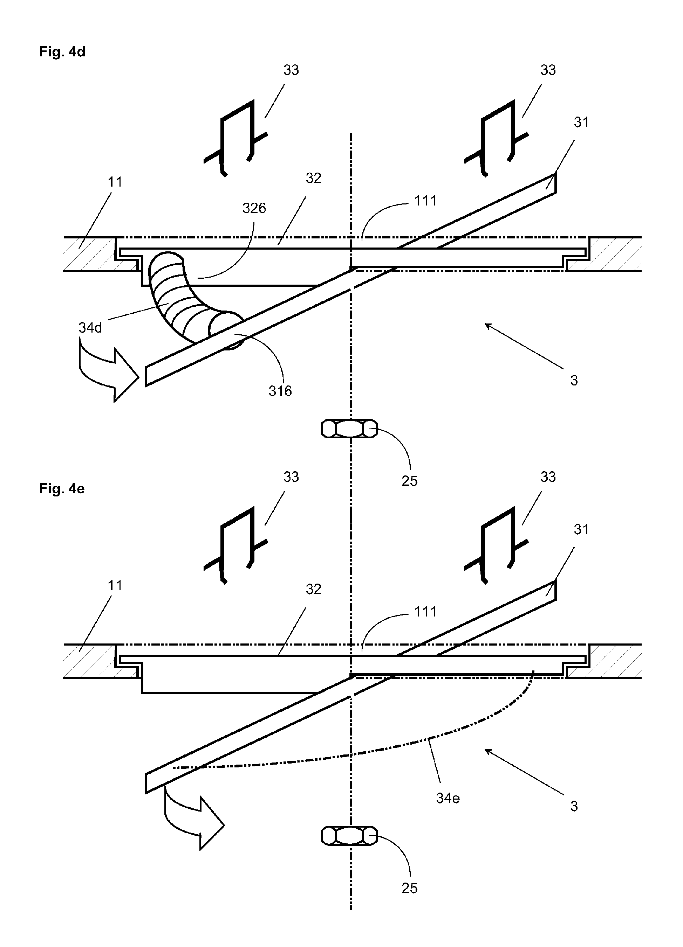

Figur 4d zeigt ein Halteteil 32 und ein Drehteil 31, die ineinander eingreifen und einander überlappende Teile 316, 326 aufweisen, zwischen denen ein vorzugsweise elastisches oder federelastisches Antriebselement 34d; 34e vorgesehen ist, das die beiden Teile 31, 32 gegeneinander dreht.

Figur 4e zeigt das Halteteil 32 und das Drehteil 31 in der Ausgestaltung von Figur 4d, jedoch mit einem Antriebselement 34e, welches eine Zugkraft auf das Drehteil 31 ausübt.

In Figur 4 ist ferner gezeigt, dass das Halteelement 32 einen Flansch 329 aufweist, der verhindert, dass dieses vollständig durch die Aufnahmeöffnung 111 hindurch tritt.

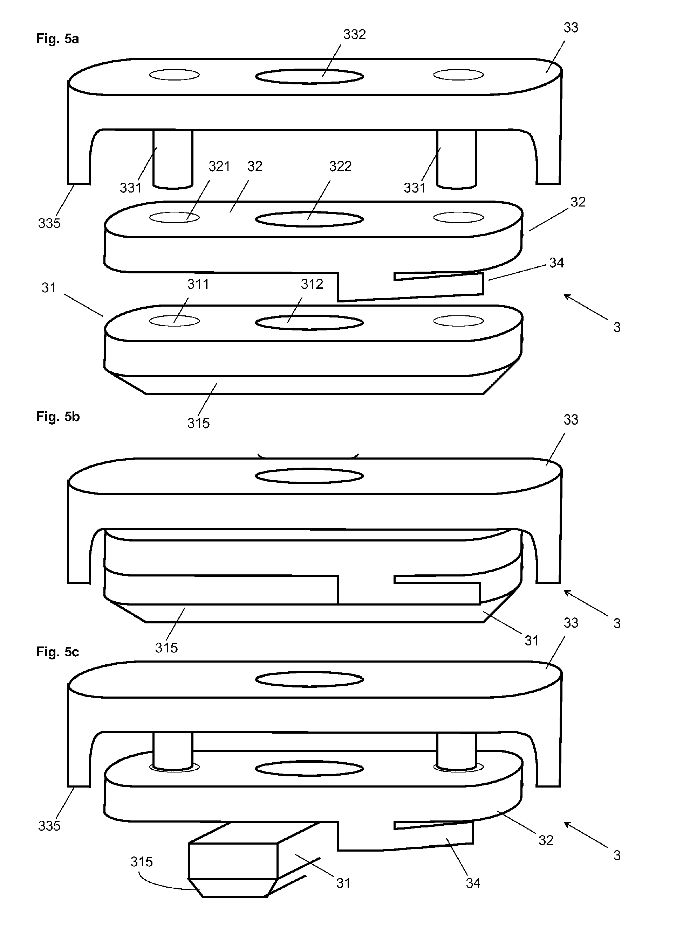

In den Figuren 5a-5c ist ein Verbindungselement 3 in einer besonders vorteilhaften Ausgestaltung gezeigt. Figur 5a zeigt Arretierelement 33 mit zwei stabförmigen Fixierteilen 331, die in Öffnungen 311, 321 im Drehteil 31 und im Halteteil 32 einführbar sind, sofern diese parallel ausgerichtet sind. Das Arretierelement 33 weist ferner beidseits ein Löseteil 335 auf, das vom Endstück 11 erfasst werden kann, um das Arretierelement 33 anzuheben und die Fixierteile 331 aus den Öffnungen 311 des Drehteils 31 hinaus zu ziehen. Dadurch wird das Drehteil 31 gelöst und kann in die Montageposition drehen, wie dies in Figur 5c gezeigt ist.

In der Ausgestaltung von Figur 5 ist das Antriebselement 34 einstückig am Halteelement 32 angeformt, so dass ein äusserst einfacher und kompakter Aufbau des Verbindungselements 3 realisiert werden kann, wie dies in Figur 5b gezeigt ist. Besonders vorteilhaft kann das mit dem Antriebselement 34 versehene Halteelement 32 aus Kunststoff gefertigt werden. Das Drehteil 31 wird hingegen bevorzugt aus Metall gefertigt, damit es die zum Tragen der Last erforderliche Festigkeit aufweist. Damit dieses einfach in die Aufnahmeöffnung 111 eingeführt werden kann, weist das Drehteil 31 an der Unterseite ferner eine Keilform 315 auf.

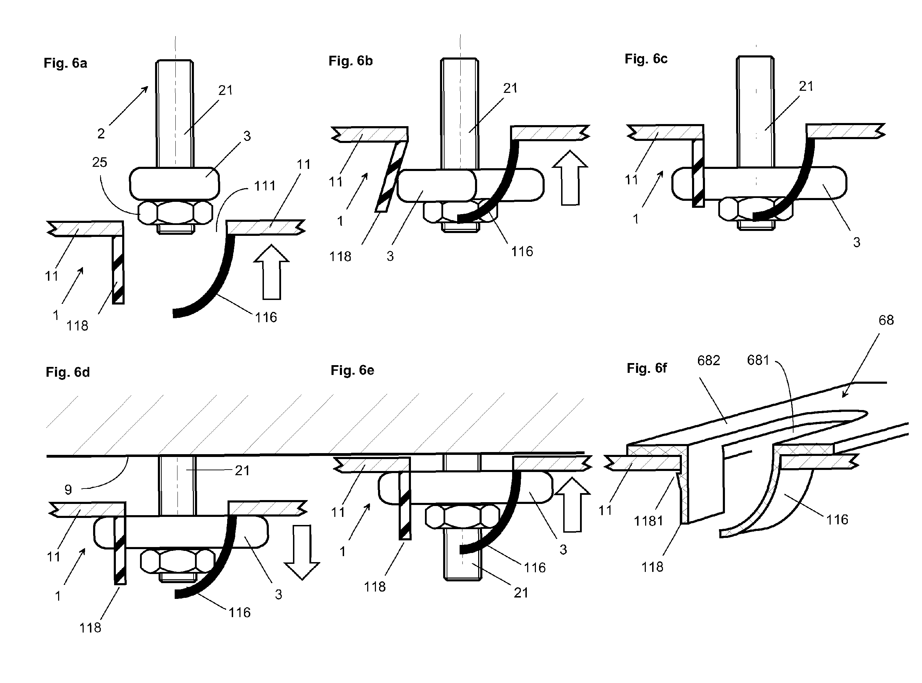

In den Figuren 6a-e ist die Deckenstütze 1 in einer vorzugsweisen Weiterbildung der Ausgestaltung von Figur 1 schematisch gezeigt. Wie die Kopfplatte 11 der Deckenstütze 1 von Figur 1 weist auch die hier gezeigte Kopfplatte 11 ein gegebenenfalls daran angeformtes Drehelement 116 auf, mittels dessen das an der Gewindestange 21 drehbar gelagerte Verbindungselement 3 während der Durchführung durch die Aufnahmeöffnung 111 erfasst und gedreht wird. Zusätzlich ist ein elastisches Fixierelement 118 vorgesehen, das während des Drehens des Drehelements 116 verdrängt wird und dieses anschliessend fixiert.

Figur 6a zeigt schematisch das mit der Gewindestange 21 verbundene Verbindungselement 3, ein einfacher Nutenstein, von der Stirnseite her. Unterhalb des Verbindungselements 3 ist eine Gewindemutter 25 auf die Gewindestange 21 aufgesetzt. Das Verbindungselement 3 ist durch das Gewinde der Gewindestange 21 derart gehalten, dass es leicht drehbar, jedoch nur unter grösserer Krafteinwirkung entlang der Gewindestange 21 verschoben werden kann. Während des Einführens des Verbindungselements 3 in die Aufnahmeöffnung 111, beim Anheben der Deckenstütze 1, wird dieses daher entlang dem nach innen gebogenen Drehelement 116 geführt und gegen das elastische Fixierelement 118 gedreht. Wie in Figur 6b gezeigt wird das elastische Fixierelement 118 soweit zurück gedrängt, bis das Verbindungselement 3 daran vorbei gedreht ist. Anschliessend kehrt das elastische Fixierelement 118 wieder in die ursprüngliche Position zurück und verhindert, dass das Verbindungselement 3 wieder zurück drehen kann (siehe Figur 6c). Der Handwerker kann daher die Deckenstütze 1 wieder nach unten führen, bis die Kopfplatte 11 am Verbindungselement 3 anliegt (siehe Figur 6d). Die Deckenstütze 1 wird von der Gewindestange 21 daher bereits zuverlässig gehalten. Nun kann die Gewindemutter 25 festgezogen und dadurch die Kopfplatte 11 an die Decke9 angepresst werden, wonach die Deckenstütze 1 vollständig fixiert ist.

Das elastische Fixierelement 118 kann ein Stahl- oder Kunststoffelement sein; beispielsweise ein Federdraht oder eine Federplatte.

Figur 6f zeigt ein mit einer Deckplatte 682 versehenes Einsatzstück 68, das in die Aufnahmeöffnung 111 derart einsetzbar ist, dass die Aufnahmeöffnung 111 und eine in der Deckplatte 682 vorgesehene Durchlassöffnung 681 übereinander liegen. An der Deckplatte 682 sind das Drehelement 116 und das elastische Fixierelement 118 angeformt, die zur Montage des Einsatzstücks 68 in die Aufnahmeöffnung 111 eingeführt werden. Am elastischen Fixierelement 118 ist ein Arretierelement 1181 vorgesehen, das die Kopfplatte 11 an der Aufnahmeöffnung 111 umklammert und das montierte Einsatzstück 68 fixiert. Die Kopfplatte 11 der Deckenstütze 1 muss daher nur mit der Aufnahmeöffnung 111 versehen werden, wonach ein dazu passendes Einsatzstück 68 eingesetzt wird. Einsatzstück 68 können beispielsweise einstückig aus Kunststoff gefertigt werden. Die gewünschte Elastizität bzw. Inelastizität des elastischen Fixierelements 118 und des Drehelements 116 kann dabei durch die Wahl der Materialdicke individuell bestimmt werden.

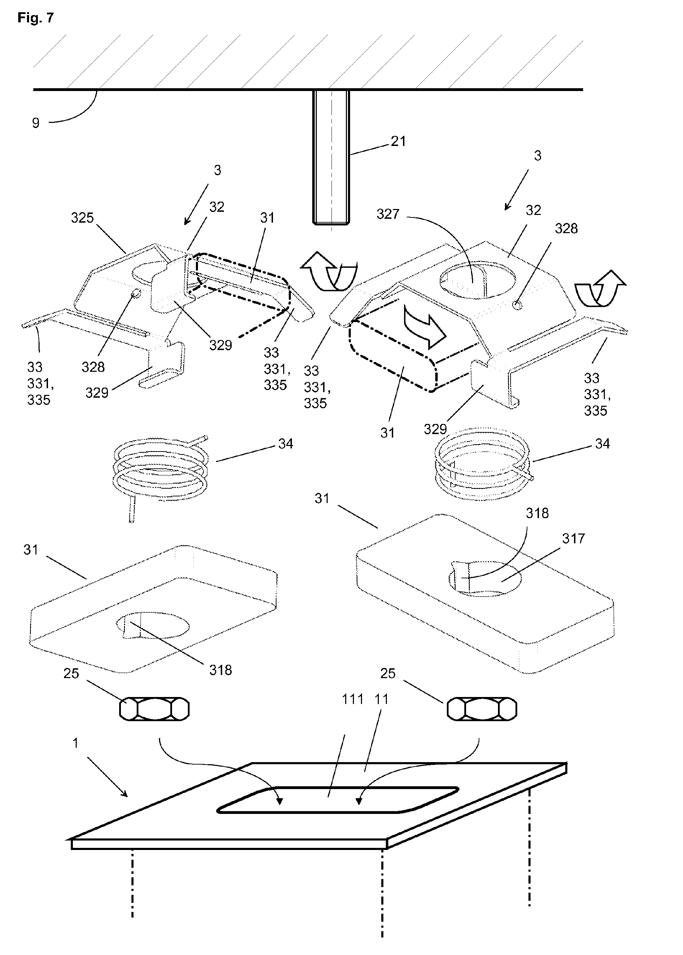

Figur 7 zeigt ein weiteres Ausführungsbeispiel der erfindungsgemässen Deckenstütze 1, die zur Ausführung von Figur 2 korrespondiert.

Die Deckenstütze 1 weist ein Verbindungselement 3 auf, das aus einem Halteteil 32 und einem Drehteil 31 besteht, die Öffnungen 327, 317 aufweisen, in die eine Gewindestange 21 einführbar ist, welche die beiden Teile 31, 32 drehbar miteinander verbindet. Das Verbindungselement 3 ist auf der linken Seite von Figur 7 von unten und auf der rechten Seite von Figur 7 von oben in räumlicher Darstellung gezeigt. Zwischen dem Halteteil 32 und dem Drehteil 31 ist ein Antriebselement 34 in Form einer Spiralfeder vorgesehen, deren Enden in Öffnungen oder Ausnehmungen 318, 328 im Halteteil 32 und im Drehteil 31 verankert werden können. Das Halteteil 32 und das Drehteil 31 sind mittels des gespannten Antriebselements 34 automatisch gegeneinander drehbar, sobald ein mit dem Halteteil 32 verbundenes Arretierelement 33 gelöst wird. Das Lösen des Arretierelements 33 erfolgt, wie oben beschrieben, nachdem das Drehteil 31 durch die Öffnung 111 hindurch getreten ist, und das Arretierelement 33 vom Rand der Öffnung 111 zurückgehalten und nach oben gebogen wird. Zur einfacheren Handhabung des Verbindungselements 3 ist das Halteteil 32 mit Haltebügeln 329 versehen, in die hinein das Drehteil 31 eingehängt werden kann. Nachdem das Antriebselement 34 eingesetzt wurde, werden das Halteteil 32 und das Drehteil 31 um 180° gegeneinander gedreht, wodurch das Antriebselement 34 gespannt wird. Anschliessend wird das Drehteil 31 in die Haltebügel 329 eingehängt. Dabei wird das Antriebselement 34 bzw. die Spiralfeder 34 komprimiert und in einen im Halteteil 32 vorgesehenen Raum verdrängt. Das Verbindungselement 3 bildet in dieser Konstellation, wie beispielsweise in Figur 2 gezeigt, ein kompaktes Modul, welches mit einem Handgriff mit der Gewindestange 21 verbunden werden kann. Nach der Montage des Verbindungselements 3 wird die Deckenstütze, wie in Figur 3 gezeigt, montiert.

Besonders vorteilhaft bei der Ausgestaltung des Halteteils 32 von Figur 7 ist, dass dieses aus einem einzigen Belegstück ausgestanzt und gebogen werden kann. Dabei ist ein Mittelteil 325 vorgesehen, an den dessen Seiten weit ausgeschnittene, zungenförmige Arretierelemente 33 vorgesehen sind, deren Enden nach unten ragen. Jedem der Arretierelemente 33 liegt ein Haltebügel 329 gegenüber. Das Drehteil 31 wird nach dem Spannen der Spielfeder 31 daher beidseits zwischen einem Arretierelement 33 und einem Haltebügel 329 sicher gehalten. Erst nach dem Anheben der zungenförmigen Arretierelemente 33 wird das Drehteil 31 freigegeben und um 90° gedreht, wo es an den Haltebügeln 329 anschlägt. Die Haltebügel 329 dienen daher zusätzlich als Anschlag für das Drehteil 31.

Auf der linken Seite von Figur 7 ist schematisch die Position gezeigt, in der das Drehteil 31 (bei gespannter Spiralfeder 34) zwischen dem Haltebügel 329 und dem Arretierelement 33 gehalten ist. Auf der rechten Seite von Figur 7 ist schematisch die Position gezeigt, in der das Drehteil 31, nachdem es durch Anheben des Arretierelements 33 freigegeben und, angetrieben vom Antriebselement 31, um 90° gedreht wurde, an den Haltebügel 329 anschlägt. In dieser Position liegt das Drehteil 31 an der Unterseite des Endstücks 11 der Deckenstütze 1 an und hält diese stabil.

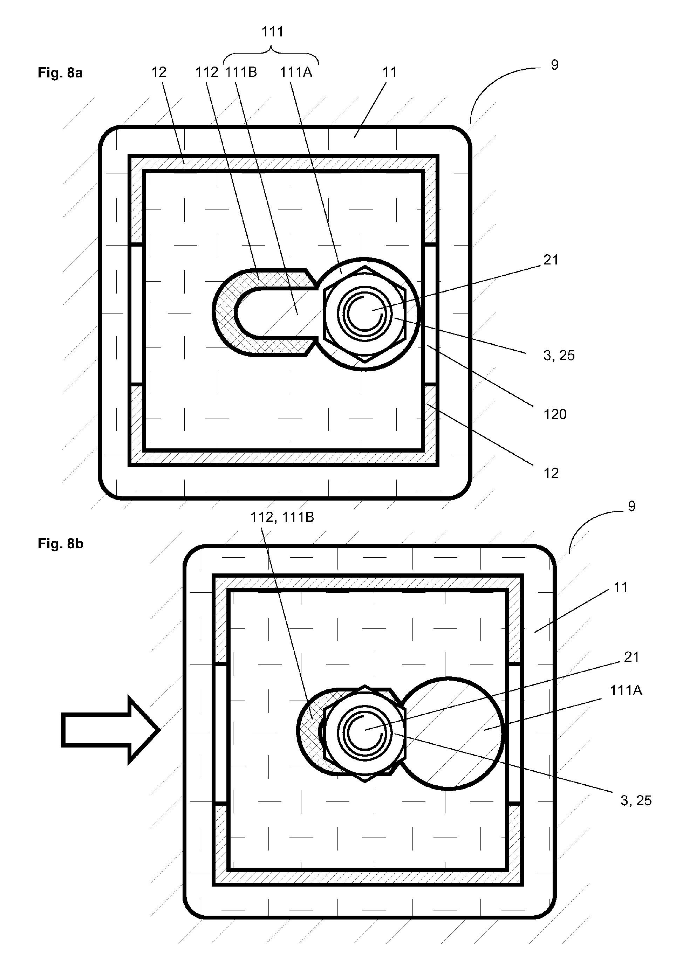

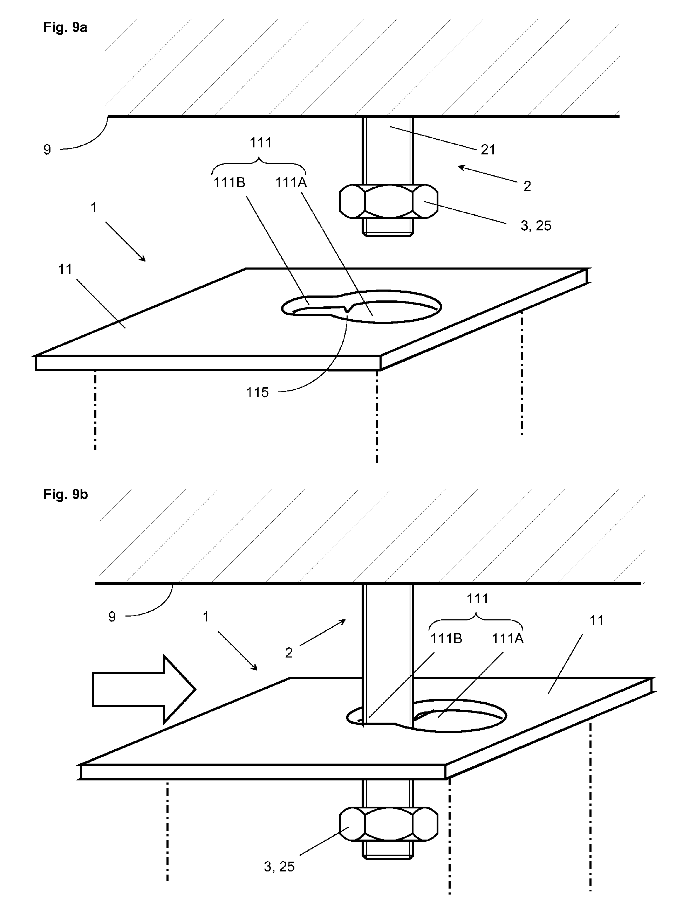

Die Figuren 8a und 8b zeigen eine erfindungsgemässe Deckenstütze 1 mit einem Endstück 11, in dem eine zweiteilige Aufnahmeöffnung 111; 111A, 111B vorgesehen ist. Die Aufnahmeöffnung 111 weist ein grösseres erstes und ein kleineres zweites Öffnungsteil 111A bzw. 111B auf. Das grössere erste Öffnungsteil 111A ist derart dimensioniert, dass die Gewindestange 21 und die damit verbundene Schraubenmutter 25, die als Verbindungselement 3 dient, hindurch führbar sind. Das vorzugsweise im Endstück 11 zentral angeordnete kleinere zweite Öffnungsteil 111B ist derart dimensioniert, dass die Gewindestange 12 vorzugsweise spielfrei einführbar ist. Der an das zweite Öffnungsteil angrenzende Rand 112, der Teil des Endstücks 11 ist, dient dabei als Flansch, der die Schraubenmutter 3, 25 hält. Der Rand 112 bzw. Flansch kann ferner eine eingesenkte Zone aufweisen, in der die Schraubenmutter 3, 25 insbesondere durch das Eigengewicht der Deckenstütze 1 unverschiebbar gehalten ist, wodurch ein unbeabsichtigtes Lösen der im ersten Arbeitsschritt vormontierten Deckenstütze 1 verhindert wird. Zusätzlich oder alternativ können Widerhaken 115 vorgesehen sein, welche die Schraubenmutter 3, 25 zurück halten (siehe Figur 9a).

Figur 8a zeigt einen Schnitt durch den Körper 12 der Deckenstütze 1 mit Darstellung des Endstücks 11 und des mit der Schraubenmutter 3, 25 versehenen Segmentankers 2 von unten gesehen. In der Darstellung von Figur 8a (siehe auch Figur 9a) wird die mit der Schraubenmutter 3, 25 versehene Gewindestange 21 durch das grössere erste Öffnungsteil 111A hindurch geführt. In der Darstellung von Figur 8b (siehe auch Figur 9b) wurde die Deckenstütze 1 seitlich gegen die Gewindestange 21 verschoben, so dass der Rand des kleineren zweiten Öffnungsteils 111B diesen in der Art eines dicht anliegenden Kragens umschliesst. Der kragenförmige Rand, der gegebenenfalls vertieft in das Endstück 11 geprägt ist, hält daher die Schraubenmutter 3, 25, die anschliessend mit einfachen Handgriffen festgezogen werden kann.

Die Figuren 9a und 9b zeigen die Deckenstütze 1 von Figur 8a und 8b in räumlicher Darstellung. In Figur 9a wird die Gewindestange 21 in die Aufnahmeöffnung 111 bzw. in das grössere erste Öffnungsteil 111A eingeführt. In Figur 9b wird die Gewindestange 21 seitlich in das kleinere zweite Öffnungsteil 111B hinein verschoben.

Die erfindungsgemässe Deckenstütze 1 kann mit einem oder mehreren Dübeln oder Segmentankern 2 verbunden werden. Sofern mehrere Dübeln oder Segmentanker 2 verwendet werden, können mehre Aufnahmeöffnungen 111 im Endstück 11 vorgesehen werden, in die in der oben beschriebenen Weise je ein Verbindungselement 3 eingeführt wird. Möglich ist ferner die Anordnung nur einer verlängerten Aufnahmeöffnung, in die zwei oder mehrere Verbindungselemente 3 in der oben beschriebenen Weise einführbar und in eine zugehörige Montageposition drehbar sind.

## Patentansprüche

1. Deckenstütze (1) insbesondere zur Montage einer Kabelführungsvorrichtung (6), mit einem Endstück (11) und einem daran anschliessenden Stützenkörper (12), der mit einem Ausleger (5) verbindbar ist, auf den die zu tragende Last (6) abgelegt werden kann, wobei das Endstück (11) mit wenigstens einem mit einer Gewindestange (21) versehenen Metalldübel (2) verbindbar ist, insbesondere einem Segmentanker, der in der Decke (9) verankerbar ist, **dadurch gekennzeichnet, dass** die Deckenstütze (1) ein an der Gewindestange (21) drehbar gelagertes Verbindungselement (3; 25) umfasst, das zumindest teilweise in eine im Endstück (11) vorgesehene Aufnahmeöffnung (111) einführbar und zumindest teilweise unter das Endstück (11) drehbar ist, wonach die Deckenstütze (1) formschlüssig mit dem Metalldübel (2) verbunden ist.

2. Deckenstütze (1) nach Anspruch 1, **dadurch gekennzeichnet, dass** das Endstück (11) wenigstens ein festes Drehelement (112; 116) aufweist, mittels dessen das Verbindungselement (3) während dessen Durchführung durch die Aufnahmeöffnung (111) automatisch drehbar ist, und dass vorzugsweise wenigstens ein elastisches Fixierelement (118) vorgesehen ist, mittels dessen das gedrehte Verbindungselement (3) in dieser Position gehalten wird.

3. Deckenstütze (1) nach Anspruch 2, **dadurch gekennzeichnet, dass** das feste Drehelement (116) und das elastische Fixierelement (118) Teil eines mit einer Durchlassöffnung versehenen Einsatzstücks (68) sind, das in die Aufnahmeöffnung (111) einsetzbar ist.

4. Deckenstütze (1) nach Anspruch 1, **dadurch gekennzeichnet, dass** das Verbindungselement (3) aus einem Halteteil (32) und einem Drehteil (31) besteht, die vorzugsweise mittels der Gewindestange (21) drehbar miteinander verbunden und mittels wenigstens eines Antriebselements (34; 34a, 34a'; 34b; 34c; 34d; 34e) automatisch gegeneinander drehbar sind, sobald ein mit dem Halteteil (32) und/oder dem Drehteil (31) verbundenes Arretierelement (33) gelöst ist.

5. Deckenstütze (1) nach Anspruch 4, **dadurch gekennzeichnet, dass** das Arretierelement (33), ein dem Fixieren des Drehteils (31) dienendes Fixierteil (331) und ein mit dem Endstück (11) zusammenwirkendes Löseteil (335) aufweist, das, während des Einführens des Drehteils (31) in die Aufnahmeöffnung (111), mit dem vorzugsweise plattenförmigen Endstück (11) zusammenwirkt, wobei das Fixierteil (331) das Halteteil (32) und das Drehteil (31) von aussen hält oder dass das Fixierteil (331) in Öffnungen (311, 321) im Halteteil (32) und/oder im Drehteil (31) gehalten ist.

6. Deckenstütze (1) nach Anspruch 4 oder 5, **dadurch gekennzeichnet, dass** das Halteteil (32) wenigstens einen Haltebügel (329) aufweist, der einem dazu korrespondierenden Arretierelement (33) gegenüber liegt, so dass das Drehteil (31) zwischen dem wenigstens einen Arretierelement (33) und dem Halteteil (32) fixierbar ist, welches nach dem Lösen des Arretierelements (33) zusätzlich als Anschlag für das Drehteil (31) dient.

7. Deckenstütze (1) nach einem der Ansprüche 4 - 6, **dadurch gekennzeichnet, dass** das wenigstens eine vorzugsweise elastischen Antriebselement (34; 34a, 34a'; 34b; 34c; 34d; 34e) mit dem Halteteil (32) und/oder dem Drehteil (31) gegebenenfalls einstückig verbunden ist und eine Zug- oder Druckkraft auf das Drehteil (31) ausübt.

8. Deckenstütze (1) nach einem der Ansprüche 4 - 7, **dadurch gekennzeichnet, dass**
a) dass das Antriebselement (34a, 34a') aus wenigstens zwei Hartmagneten besteht, deren Pole gleicher Art einander zugewandt sind; oder
b) dass das Antriebselement (34b) eine vorzugsweise metallene und koaxial zur Gewindestange (21) ausgerichtete Spiralfeder ist, deren Enden am Halteteil (32) und am Drehteil (31) anliegen; oder
c) dass das Antriebselement (34c) ein elastisches Kunststoffelement ist, das mit dem Halteteil (32) und dem Drehteil (31) verbunden ist;
d) dass das Halteteil (32) und das Drehteil (31) ineinander eingreifen und zwischen einander überlappenden Teilen (316, 326) des Halteteils (32) und des Drehteils (31) ein vorzugsweise elastisches oder federelastisches Antriebselement (34d; 34e) vorgesehen ist.

9. Deckenstütze (1) nach einem der Ansprüche 1 - 8, **dadurch gekennzeichnet, dass** das Verbindungselement (3) oder das das daran vorgesehene Halteteil (32) direkt oder über ein Lagerelement (35) formschlüssig oder kraftschlüssig mit der Gewindestange (21) verbunden ist, und/oder dass unterhalb des Verbindungselements (3) eine Schraubenmutter (25) vorgesehen ist, mittels der das Verbindungselement (3) gegen das Endstück (11) verschiebbar ist.

10. Deckenstütze (1) nach einem der Ansprüche 1 - 9, **dadurch gekennzeichnet, dass** das vorzugsweise aus einem metallenen Blechstück ausgestanzte und gebogene Halteteil (32) mit einem Mittelstück (325) versehen ist, das eine der Aufnahme des Antriebselements (34), vorzugsweise einer Spiralfeder, dienende Wölbung; ein der Ankopplung des Antriebselements (34) dienendes Kopplungselement (328); eine der Durchführung der Gewindestange (21) dienende Öffnung (327); und wenigstens an einer Seite ein Arretierelement (33) und diesem gegenüberliegend einen Haltebügel (329) aufweist, der bei gespanntem Antriebselement (34) dem Halten des einen Endstücks des Drehteils (31) und bei gelöstem Arretierelement (33) als Anschlag für das andere Endstück des Drehteils (31) dient.
